**Europäisches Patentamt**

(19) **European Patent Office**

**Office européen des brevets**

(11) Publication number: **0 183 889**
**A1**

(12) **EUROPEAN PATENT APPLICATION**

(21) Application number: **84850374.4**

(22) Date of filing: **04.12.84**

(51) Int. Cl.⁴: **B 65 D 6/18**
**B 62 B 3/02**

(43) Date of publication of application:
**11.06.86 Bulletin 86/24**

(84) Designated Contracting States:
**DE FR GB SE**

(71) Applicant: **Rolls Systems AB**
**Stallarholmsvägen 10**
**S-120 40 Bandhagen(SE)**

(72) Inventor: **Larsson, Ivan**
**Skolvägen 14 A**
**S-139 00 Värmdö(SE)**

(72) Inventor: **JÖhsson, Jan-Erik**
**c/o Rolls Systems AB P.O. Box 2537**
**S-200 12 Malmö(SE)**

(74) Representative: **Omming, Allan**
**A. OMMING & CO. AB Sveavägen 28-30**
**S-111 34 Stockholm(SE)**

(54) **A foldable goods container.**

(57) The invention relates to a collapsible or foldable, wheeled good container provided with a bottom (9) and four side-walls (11, 12; 14, 15; 18, 19).

The side-walls of such goods containers are normally arranged to be folded down in sequence, over the container bottom. This enables collapsed containers to be piled in stacks, so as to save space when returning empty containers. Stacking of such containers, however, is difficult to carry out and requires the lifting work of two persons.

In accordance with the invention, the handling of collapsed empty goods containers has been made easier, by giving the bottom of the container the form of a four-sided right-angled frame structure (1-6) on which there is mounted a bottom plate (9), wherewith two mutually opposing frame parts (3, 4; 5, 6) are arranged to be folded inwardly and the bottom plate to be swung or folded upwards. The two remaining frame parts (1, 2), to which free-standing sides (11, 12) of the container are attached and which suitably carry wheels (13), move close together when the container is folded or collapsed, to be separated solely by the inwardly directed frame parts (3, 4; 5, 6). Subsequent to being collapsed, the goods container takes up but little space and can be readily pushed away, to be stacked with other collapsed containers in a small space.

_Fig. 2_ _Fig. 3_

## A foldable goods container

The present invention relates to a foldable or collapsible goods container having four side-walls and a bottom,
including a four-sided, right-angled frame structure comprising two rigid, mutually opposed frame parts and two
further frame parts which are hinged at the ends thereof
to the ends of the first mentioned frame parts and are
foldably arranged at the centre thereof, and further
comprising a bottom plate pivotally journalled at
said frame structure in a manner which enables said
bottom plate to be swung upwardly.

Goods containers of this kind in which the side-
walls can be lowered in sequence over the floor of the
container are known to the art, and are used for transporting
letter post and packages. It is also known in such containers for the side-walls to be hinged at their midpoint
regions. Because such containers can be collapsed or
folded-down when empty, they can be stacked one upon another
when returned empty from a goods delivery station, for
example, thereby requiring much less space and room.

The work involved in stacking such down-folded
containers, however, is relatively time consuming and
onerous, as is also the task of unstacking the containers
when preparing the same for further use. This work normally
requires the help of an assistant, or the use of lifting
means.

The object of the invention is to provide a foldable
goods container which can be handled in a much simpler fashion
and which does not require the help of an assistant or
lifting means.

This object is achieved in accordance with the
invention, by means of a goods container having the charac-
terizing features set forth in the following claims.

Thus, the foldable or collapsible goods container
according to the invention includes a bottom frame structure having two mutually opposing frame parts which can be folded inwardly in a V-form, such that in principle the two remaining frame parts are displaced in parallel towards one another, until the foldable frame parts are folded double. So that this can be achieved, the side walls pivotally suspended by the stationary side-walls are mounted in a manner which enables them to be swung first to a position in which they are parallel with and adjacent to the two remaining stationary side-walls, and means are provided which enable a bottom plate or floor plate resting on the bottom frame structure to be subsequently swung up against either of the stationary side walls or folded up against both side-walls.

One feature characteristic of the goods container according to the invention is that the container can be collapsed with relative ease and without undue effort. Once the foldable frame parts have begun to fold inwards, further folding can be effected automatically, by just tipping the container slightly. The collapsed goods containers can then be placed side-by-side, for transportation back to a filling station. Consequently, it is no longer necessary to place the containers in high stacks, to save space on the return journey.

The invention will now be described in more detail with reference to an embodiment thereof illustrated schematically in the accompanying drawings, in which

Figure 1 is a view from above of a goods container constructed in accordance with the invention;

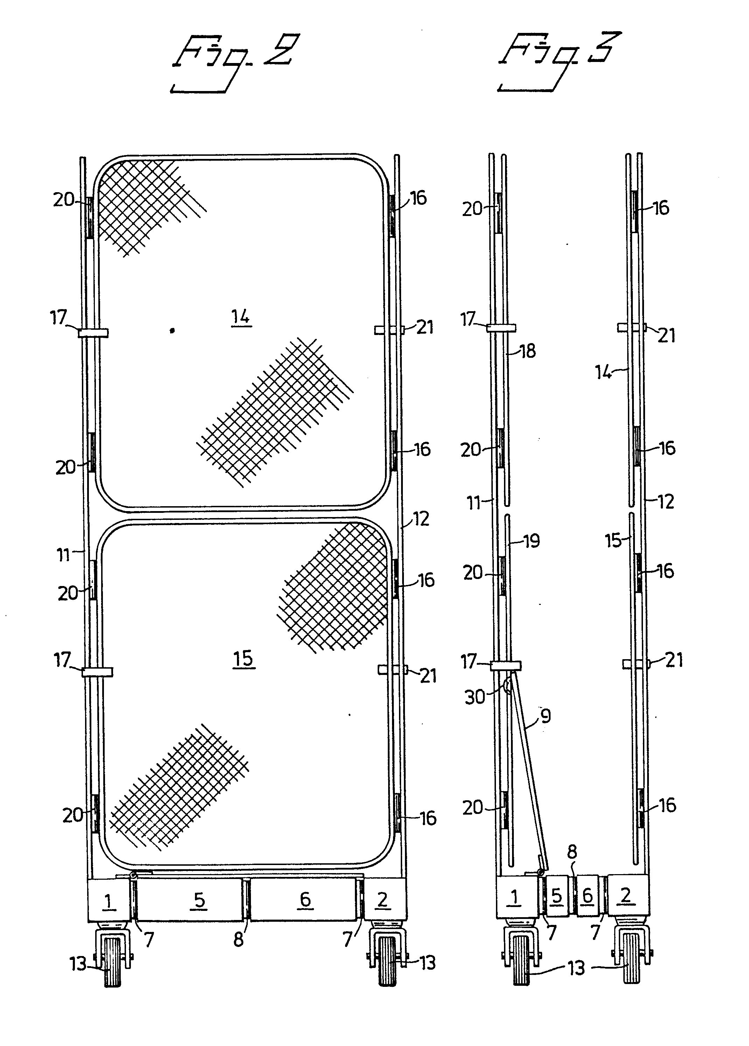

Figure 2 is a view of one short side of the container in its extended position; and

Figure 3 is a view similar to Figure 2, but with the container in a collapsed or folded state.

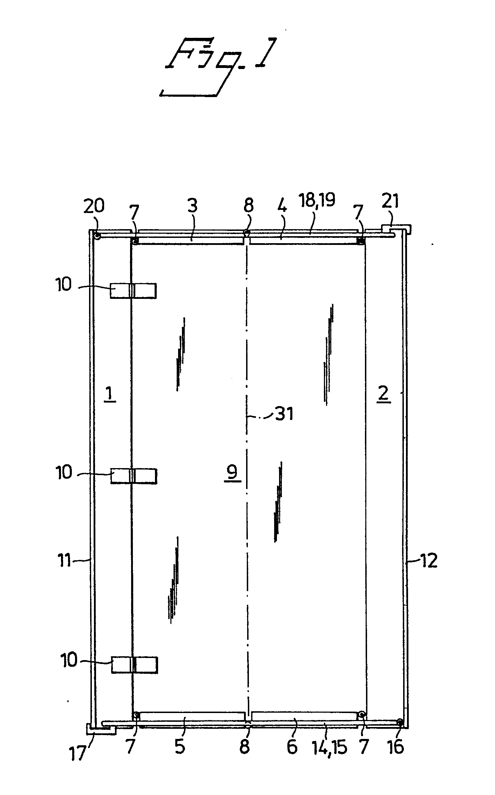

As shown in Figure 1, the goods container comprises a four-sided right-angled frame structure having two mutually opposed frame parts 1,2. Hinged to respective ends of the frame parts 1,2 by means of hinges 7 are further frame parts, which each comprise two sections 3,4 and 5,6 respectively.

These sections 3,4 and 5,6 are hinged centrally by means of respective hinges 8. The hinges 7,8 are positioned and designed so that the frame parts 3,4 and 5,6 can be folded inwardly, wherewith the frame parts 1,2 move, in principle, towards one another in parallel, until the sections 3,4 and 5,6 are folded double therebetween.

The frame structure also carries a bottom plate or flooring 9 which is mounted on hinges 10 which enable the bottom plate to swing-up from its planar goods-supporting position, in which said plate rests on supports (not shown) mounted on the frame part 2, and optionally on the intermediate frame parts. In the illustrated embodiment, each of the frame parts 1 and 2 has firmly attached thereto a respective lattice-type side-wall 11 and 12. The goods container is also supported on four wheels 13.

Pivotally connected by means of hinges 16 to the side-wall 12 are two lattice-type end-walls 14,15, which can be locked to the side-wall 11 by means of a latch 17 fixed thereto.

Two further end walls 18,19 are pivotally mounted to the side wall 11 by means of hinges 20 and can be latched to the side-wall 12 by means of a latch 21 fixed thereto.

When collapsing the goods container, the end-walls 14, 15 and 18,19 are swung inwardly, into abutment with the inner surfaces of a respective side-wall 11,12. The bottom plate 9 is then lifted and secured with a spring catch 30, Figure 3. The foldable frame parts 3,4 and 5,6 can then be folded inwardly, whereupon the goods container obtains the appearance illustrated in Figure 3.

The bottom plate or flooring 9 may be hinged to both frame parts 1,2 and arranged to be swung along a selected line, such as that shown by the chain line 31 in Figure 3.

CLAIMS

1. A foldable or collapsible goods container having four side-walls and a bottom, including a four-sided, right-angled frame structure comprising two rigid, mutually opposed frame parts and two further frame parts which are hinged at the ends thereof to the ends of the first mentioned frame parts and are foldably arranged at the centre thereof, and further comprising a bottom plate pivotally journalled at said frame structure in a manner which enables said bottom plate to be swung upwardly, characterized in that two of the side-walls (11,12) are mounted free-standing on the two rigid, mutually opposing frame parts (1,2); in that each of the two remaining side-walls (14,15; 18,19) is pivotally suspended from one edge of the free-standing side-walls and can be latched against the other of said free-standing side-walls; and in that the foldable frame parts(3,4; 5,6) are arranged in a manner which enables them to be folded inwardly towards the centre of the frame structure.

2. A goods container according to Claim 1, characterized in that the bottom plate (9), when occupying its downwardly folded position, is arranged to lock the foldable frame parts (3,4; 5,6) in their straight, unfolded or extended positions.

3. A goods container according to Claim 1 or Claim 2, characterized in that the bottom plate (9) is hinged to the two non-foldable frame parts (1,2) and is arranged for upward folding along a centre line (31).

0183889

*Fig. 1*

0183889

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-2 558 126 (DAVENPORT) <br> * Figures 1,2,6; column 2, lines 34-41 * | 1-3 | B 65 D 6/18 <br> B 62 B 3/02 |
| A | FR-A-2 320 240 (ZENITH FRANCE SA) <br> * Figures 2,6 * | 1-3 | |
| A | US-A-3 865 269 (COLEMAN) <br> * Figures 2,5,6 * | 1-3 | |
| A | FR-A-2 122 009 (MORARI SA) <br> * Figures 1-4; page 2, lines 30-40 * | 1-3 | |

TECHNICAL FIELDS SEARCHED (Int. Cl.4)

B 65 D

The present search report has been drawn up for all claims

| Place of search | Date of completion of the search | Examiner |
|---|---|---|
| THE HAGUE | 19-07-1985 | STEEGMAN R. |

EPO Form 1503 03 82